# EUROPEAN PATENT APPLICATION

(11) **EP 2 014 438 A1**
(43) Date of publication of application: **14.01.2009**
(21) Application number: 07110775.9
(22) Date of filing: 21.06.2007
(51) Int. Cl.: B29C 45/00, B29C 47/00, C08L 23/10

(54) **Process for the production of polypropylene articles with increased response to surface energy increasing treatment**

(71) Applicant: TOTAL PETROCHEMICALS RESEARCH FELUY, 7181 Seneffe (Feluy) (BE)
(72) Inventor: Radermacher, Fabienne, B - 6230, OBAIX (BE); Berges, Elke, B-2530, Boechout (BE)

(57) **Abstract**

The present invention relates to a process for the production of polypropylene articles with improved response to a surface energy increasing treatment, wherein the polypropylene comprises a metallocene-catalyzed polyethylene. The present invention further relates to the use of metallocene-catalyzed polyethylene as an additive for improving the response of polypropylene to surface energy increasing treatments.

## Description

### Field of the invention

The present invention relates to a process for the production of polypropylene articles with improved response to a surface energy increasing treatment, wherein the polypropylene comprises a metallocene-catalyzed polyethylene. The present invention further relates to the use of metallocene-catalyzed polyethylene as an additive for improving the response of polypropylene to surface energy increasing treatments.

### The technical problem and the prior art

Polypropylene has become one of the most widely used commercial polymers. While its mechanical, chemical and processing properties make it the material of choice in a wide range of applications, its chemical inertness and low surface energy pose problems in applications that require printing, coating, bonding or adhesion with other substrates. For these applications it is therefore necessary to subject the polypropylene to a surface-modifying treatment that increases the surface energy. In printing applications the surface energy needs to be increased from around 30 mN/m to around 38 mN/m for solvent-based inks and to around 45 mN/m for water-based inks. Increasing the surface energy of polypropylene is especially difficult as the energy that is required to increase the surface energy is much higher than for other polymers.

Methods to increase the surface energy of polypropylene include chemical treatment, flame-treatment, and Corona-treatment. For safety and environmental reasons chemical treatment using strong oxidizing agents such as chromic acid is less and less used. In flame-treatment the polypropylene surface is treated with an oxidizing gas flame. In Corona-treatment the polypropylene surface is treated with air that has been electrically ionized. All methods have in common that oxidized centers are generated, which facilitate the adhesion of inks etc.

A major disadvantage of flame- and Corona-treatment is that the effect of the treatment quickly wears off. Within one week from treating the polypropylene a decay of 3 mN/m may occur. Thus, in many cases the treated polypropylene requires a "refresher" treatment before further transformation.

There is therefore a strong interest in the industry to facilitate the surface modification of polypropylene.

### Brief description of the invention

We have now discovered a process that allows the production of polypropylene articles with improved response to surface energy increasing treatments.

Thus, the present invention provides a process for the production of polypropylene articles with improved response to surface energy increasing treatment, said process comprising the steps of
(a) providing a polypropylene comprising metallocene-catalyzed polyethylene,
(b) subsequentially forming an article, and
(c) subjecting said article to a treatment that increases the surface energy.

Further, the present invention relates to the use of a metallocene-catalyzed polyethylene as surface energy increasing additive.

### Detailed description of the invention

The polypropylene used in the present invention can be a homopolymer, random copolymer or heterophasic copolymer. Homopolymer and random copolymer are the preferred polypropylenes. Random copolymer is the most preferred polypropylene. The random copolymer and heterophasic copolymer are copolymers of propylene and at least one comonomer, said comonomer selected from the group consisting of ethylene and C₄-C₁₀ alpha-olefins, such as 1-butene, 1-pentene, 1-hexene, 1-octene.

The random copolymer comprises up to 6 wt%, preferably up to 5 wt% and most preferably up to 4 wt% of at least one comonomer. It comprises at least 0.1 wt%, more preferably at least 0.5 wt%, even more preferably at least 1 wt% and most preferably at least 2 wt% of at least one comonomer. Preferably, the random copolymer is a copolymer of propylene and ethylene.

The heterophasic copolymer comprises a matrix, which in turn is made of propylene homopolymer or random copolymer as defined above, and a rubber phase. The heterophasic copolymer may comprise from 5 wt% to 35 wt% of a rubber phase. Preferably, the heterophasic copolymer is a copolymer of propylene and ethylene. It has an ethylene content in the range from 4 wt% to 15 wt%. Preferably, the rubber phase is an ethylene propylene rubber.

The polypropylene used in the present invention can be produced by polymerizing propylene and one or more optional comonomers according to methods well known to the skilled person.

The polypropylene used in the present invention has a melt flow index in the range from 0.1 dg/min to 100 dg/min (measured according to ISO 1133, condition L, at a temperature of 230°C under a load of 2.16 kg). The person skilled in the art is aware that the suitable melt flow range of the polypropylene depends upon the respective method of forming an article. Thus, for injection stretch blow molding (ISBM) the preferred melt flow index range is from 1.5 dg/min to 30 dg/min. For cast film extrusion the preferred melt flow index range is from 3.0 dg/min to 15 dg/min. For blown film extrusion the preferred melt flow index range is from 0.3 dg/min to 3.0 dg/min. For blow molding the preferred melt flow index range is from 0.3 dg/min to 3.0 dg/min. For sheet extrusion the preferred range is from 2.0 dg/min to 10 dg/min. For injection molding the preferred range is from 10 dg/min to 100 dg/min..

The polypropylene of the present invention comprises at least 1 wt%, preferably at least 2 wt% of metallocene-catalyzed polyethylene, i.e. a polyethylene that has been produced using a metallocene-based catalytic system. The polypropylene comprises at most 20 wt%, preferably at most 15 wt% and most preferably at most 10 wt% of metallocene polyethylene

The polypropylene comprising metallocene-catalyzed polyethylene can be prepared by dry-blending or compounding. It is also possible to conduct the compounding during the pelletization step in a polypropylene production facility.

Blends of polypropylene and metallocene-catalyzed polyethylene are for example known from WO 2005/005143 for improving the impact performance of containers. However, WO 2005/005143 is silent on the use of such compositions for improving the response to surface energy increasing treatments.

The metallocene-catalyzed polyethylene can be a homopolymer or copolymer of ethylene and at least one comonomer, said comonomer being a C₃ to C₁₀ alpha-olefin, such as 1-butene, 1-pentene, 1-hexene, 1-octene, 1-methylpentene, with 1-butene and 1-hexene being the preferred comonomers and 1-hexene being the most preferred comonomer.

The metallocene-based catalytic system used to produce the metallocene-catalyzed polyethylene comprises a metallocene, a support and an activating agent. Such metallocene-based catalytic systems are known to the person skilled in the art and need not be explained in detail.

For the purposes of the present invention any known metallocene can be used, such as for example bis(n-butylcyclopentadienyl)zirconium dichloride. It is, however, preferred to use a metallocene of the following general formula

R"(Ind)₂ MQ_{q}

wherein Ind is an indenyl or a tetrahydroindenyl, substituted or unsubstituted, R" is a structural bridge imparting rigidity between the two indenyls and is a C₁-C₄ alkylene radical, a dialkyl germanium or silicon or siloxane, or a alkyl phosphine or amine radical, preferably Me₂C, ethylene, Ph₂C or Me₂Si; M is a group 4, 5 or 6 transition metal; Q is a hydrocarbyl radical such as aryl, alkyl, alkenyl, alkylaryl, or aryl alkyl radical having from 1 to 20 carbon atoms, hydrocarboxy radical having from 1 to 20 carbon atoms or halogen and can be the same or different from each other; and q is the valence of M minus 2.

Preferably, the indenyls or tetrahydroindenyls, if substituted are symmetrically substituted in positions 2 and/or 4, and more preferably they are unsubstituted.

Such metallocene components are disclosed in WO 96/35729. The most preferred metallocene is ethylenebis(4,5,6,7-tetrahydro-1-indenyl)zirconium dichloride.

The molecular weight distribution of the metallocene-catalyzed polyethylene can be defined by a parameter known as the dispersion index D, which is the ratio between the average molecular weight by weight (M_{w}) and the average molecular weight by number (Mₙ). The dispersion index D constitutes a measure of the width of the molecular weight distribution. For the metallocene-catalyzed polyethylene of the present invention the dispersion index D is from 2 to 7, preferably from 2 to 5.

The metallocene-catalyzed polyethylene used in the present invention has a melt flow index in the range from 0.1 dg/min to 100 dg/min (measured according to ISO 1133, condition D, at a temperature of 190°C and a load of 2.16 kg). The person skilled in the art is aware that the suitable melt flow range of the polyethylene depends upon the respective method of forming an article. Thus, for injection stretch blow molding (ISBM) the preferred melt flow index range is from 1.5 dg/min to 30 dg/min. For cast film extrusion the preferred melt flow index range is from 3.0 dg/min to 15 dg/min. For blown film extrusion the preferred melt flow index range is from 0.3 dg/min to 3.0 dg/min. For blow molding the preferred melt flow index range is from 0.3 dg/min to 3.0 dg/min. For sheet extrusion the preferred range is from 2.0 dg/min to 10 dg/min. For injection molding the preferred range is from 10 dg/min to 100 dg/min.

The metallocene-catalyzed polyethylene used in the present invention has a density of at least 0.920 g/cm³, preferably of at least 0.925 g/cm³, more preferably of at least 0.927 g/cm³, even more preferably of at least 0.930 g/cm³ and most preferably of at least 0.932 g/cm³. It has a density of at most 0.965 g/cm³, preferably of at most 0.955 g/cm³, more preferably of at most 0.950 g/cm³, even more preferably of at most 0.945 g/cm³, and most preferably of at most 0.940 g/cm³. The density is measured at 23°C following the method described in ASTM D 1505.

Without wishing to be bound by theory, it is believed that the amount of crystallization plays a role in the compatibility between polypropylene and metallocene-catalyzed polyethylene, when measured at high temperature or at low equivalent Short Chain Branches (SCB) content. The amount of crystallization as a function of short chain branches is determined by the Stepwise Isothermal Segregation Technique (SIST). In this technique, the sample is heated from room temperature (25 °C) to 220 °C at a rate of 200 °C/min. It is kept at 220 °C for 5 minutes. It is then dropped to the temperature of 140 °C at a rate of 20 °C/min and kept at that temperature for 40 minutes.

The temperature is then dropped by steps of 5 °C at a rate of 20 °C/min and kept at each step for 40 minutes until the temperature of 90 °C is reached. It is then allowed to cool down to 25 °C at the fastest cooling rate and maintained at 25 °C for 3 minutes. It is next reheated from 25 °C to 180 °C at a rate of 5 °C/min. The percentage of crystallization is deduced from the curve representing the SCB as a function of melting temperature following the method described by Satoru Hosada in Polymer Journal, vol. 20, p. 383, 1988. In the metallocene-catalyzed polyethylene used in the present invention, the percentage of crystallization corresponding to chains having less than 10 SCB for 1000 carbon atoms is at least 4 %, preferably it is at least 7 %.

Both, the polypropylene as well as the metallocene-catalyzed polyethylene may contain additives such as, by way of example, antioxidants, light stabilizers, acid scavengers, lubricants, antistatic additives, nucleating/clarifying agents, colorants, slip agents. An overview of such additives may be found in Plastics Additives Handbook, ed. H. Zweifel, 5th edition, 2001, Hanser Publishers.

Using the polypropylene comprising metallocene-catalyzed polyethylene according to the present invention articles may be formed by any known transformation method, such as for example injection molding, blow molding, injection stretch blow molding (ISBM), cast or blown film extrusion, fiber or nonwoven extrusion, sheet extrusion.

Following their production the polypropylene articles are subjected to a surface energy increasing treatment, such as for example chemical treatment, flame-treatment and Corona-treatment. The preferred methods are flame- and Corona-treatment. The most preferred method is Corona-treatment.

For Corona-treating the polypropylene articles are passed between two electrodes with a voltage usually in the range from about 10 kV to about 20 kV. At such voltages spray or corona discharge can occur, which then causes the air above the article to ionize and react with the surface molecules of the polypropylene article, thus forming polar centers.

For flame treatment with a polarized flame an electrical voltage is applied between a burner, serving as the negative pole, and another element, for example a chill roll in film or sheet extrusion. The applied voltage is in the range from about 0.5 kV to about 3 kV. It causes an acceleration of ionized atoms, which hit the polypropylene surface at great speed and then break bonds on the surface of the polypropylene article. In consequence, polar centers are created.

The polypropylene comprising metallocene-catalyzed polyethylene has been found to be more responsive to surface energy increasing treatments. Very surprisingly, the polypropylene of the present invention has also been found to have a slower decay of the effects of the surface-modifying treatment. Compared to surface energy enhanced articles made from pure polypropylene, the polypropylene articles comprising metallocene-catalyzed polyethylene can be stored for a longer period of time before further transformation, e.g. printing, without having to undergo a "refresher" treatment.

Thus, the metallocene-catalyzed polyethylene serves as an additive in polypropylene for improving the response to surface energy increasing treatments, such as for example chemical treatment, flame-treatment and Corona-treatment. The preferred methods are flame- and Corona-treatment. The most preferred method is Corona-treatment.

## Claims

1. Process for the production of polypropylene articles with improved response to surface energy increasing treatment, said process comprising the steps of
(a) providing a polypropylene comprising metallocene-catalyzed polyethylene,
(b) subsequentially forming an article, and
(c) subjecting said article to a treatment that increases the surface energy.

2. The process according to claim 1, wherein the polypropylene comprises from 1 wt% to 20 wt%, preferably from 2 wt% to 15 wt%, of metallocene-catalyzed polyethylene.

3. The process according to any of the preceding claims, wherein the density of the metallocene-catalyzed polyethylene is at least 0.920 g/cm³, preferably at least 0.925 g/cm³, 0.927 g/cm³, 0.930 g/cm³ or 0.932 g/cm³ as measured at 23°C according to ASTM D 1505.

4. The process according to any of the preceding claims, wherein the density of the metallocene-catalyzed polyethylene is at most 0.965 g/cm³, preferably at most 0.955 g/cm³, 0.950 g/cm³, 0.945 g/cm³, or 0.940 g/cm³ as measured at 23°C according to ASTM D 1505.

5. The process according to any of the preceding claims, wherein the metallocene-catalyzed polyethylene has a percentage of crystallization corresponding to chains having less than 10 short chain branches per 1000 carbon atom of at least 4 %, preferably at least 7 %.

6. The process according to claim 1, wherein the surface energy increasing treatment of step (c) is a Corona-treatment or a flame-treatment.

7. The process according to any of the preceding claims, wherein in step (b) the polypropylene articles is formed by a method selected from the group consisting of injection stretch blow molding, cast film extrusion, blown film extrusion, sheet extrusion and injection molding.

8. Use of a metallocene-catalyzed polyethylene as an additive for improving the response of polypropylene to surface energy increasing treatments.

9. Use of a metallocene-catalyzed polyethylene according to claim 8, wherein the density of the metallocene-catalyzed polyethylene is at least 0.920 g/cm³, preferably at least 0.925 g/cm³, 0.927 g/cm³, 0.930 g/cm³ or 0.932 g/cm³ as measured at 23°C according to ASTM D 1505.

10. Use of a metallocene-catalyzed polyethylene according to claim 8 or claim 9, wherein the density of the metallocene-catalyzed polyethylene is at most 0.965 g/cm³, preferably at most 0.955 g/cm³, 0.950 g/cm³, 0.945 g/cm³ or 0.940 g/cm³ as measured at 23°C according to ASTM D 1505.

11. Use of a metallocene-catalyzed polyethylene according to any of claims 8 to 10, wherein the metallocene-catalyzed polyethylene has a percentage of crystallization corresponding to chains having less than 10 short chain branches per 1000 carbon atom of at least 4 %, preferably at least 7 %.

12. Polypropylene articles made according to the process of any of claims 1 to 7.
